# EUROPÄISCHE PATENTSCHRIFT

(11) **EP 0 478 876 B1**
(45) Veröffentlichungstag und Bekanntmachung des Hinweises auf die Patenterteilung: **30.11.1994**
(21) Anmeldenummer: 91103882.6
(22) Anmeldetag: 14.03.1991
(51) Int. Cl.: B29C 39/42

(54) **Anordnung zum Füllen von Giessformen mit Giessharz und dergleichen**
Device for filling moulds with cast resin and such things
Dispositif pour remplir des moules à fondre avec de la résine de coulée et similaires

(30) Priorität: 05.10.1990 DE 9013922 U; 13.10.1990 DE 9014257 U
(43) Veröffentlichungstag der Anmeldung: 08.04.1992
(73) Patentinhaber: WILHELM HEDRICH VAKUUMANLAGEN GMBH & CO. KG, D-35630 Ehringshausen (DE)
(72) Erfinder: Steindorf, Hans-Joachim, W-6349 Sinn (DE)
(74) Vertreter: Missling, Arne, Dipl.-Ing.

(56) Entgegenhaltungen:
- DE-A- 2 505 823
- DE-A- 2 637 355
- DE-A- 3 111 957
- FR-A- 2 250 619

## Beschreibung

Die Erfindung betrifft eine Vorrichtung zum Füllen von Gießformen mit Gießharz oder dergleichen mit einem Druckgefäß zur Aufnahme des aufbereiteten Gießharzes, von dem aus die Gießformen verfüllt und unter Druck geliert werden.

Grundlegende Elemente einer solchen Vorrichtung sind bereits aus der DE-A-27 48 982 bekannt. Es ist darüber hinaus auch ferner bekannt, eine derartige Vorrichtung so zu treffen, daß die vorbereitete Gießharzmischung, die in einem Vorratsbehälter durch Rühren und Anschluß an eine Vakuumpumpe beständig entgast worden ist, in ein Druckgefäß einzufüllen, wobei auch das Einfüllen bei zugeschalteter Vakuumpumpe erfolgt. Das Druckgefäß selbst oder ein entsprechender Gießbehälter kann für das Vergießen in die Gießform verwendet werden, wobei zunächst die Zufuhrleitung geschlossen wird und das Druckgefäß mit einer Druckluftquelle oder dergleichen verbunden wird, so daß die Gießharzmischung aus dem Druckgefäß in die Gießform gedrückt werden kann.

Es ist nicht erwünscht, daß die bereits unter Vakuum entgaste Gießharzmischung mit Druckluft oder dergleichen in Verbindung gebracht wird, wodurch wiederum eine gewisse Gasaufnahme in der Gießharzmischung erfolgt. Außerdem ist es ungünstig, daß im Druckgefäß oder in einem Teil davon eine gewisse Menge des Gießharzes erstarrt und an den Wänden verbleibt, so daß nach einigen Arbeitszyklen die belasteten Teile gereinigt werden müssen.

Es ist deshalb die Aufgabe der Erfindung, eine Vorrichtung der eingangs näher bezeichneten Art so auszubilden, daß eine erneute Gasbeaufschlagung des bereits entgasten Gießharzes vor dem Verfüllen in die Gießformen nicht mehr stattfindet, wobei gleichzeitig Reinigungsarbeiten am Druckgefäß aufgrund erstarrten Gießharzes auf ein Minimum reduziert werden.

Erfindungsgemäß wird die Aufgabe dadurch gelöst, daß in dem Druckgefäß ein elastischer Gießbehälter mit mindestens einer Einfüll- und Entleerungsöffnung angeordnet ist, die wahlweise an eine Unterdruckquelle, einen Vorratsbehälter oder Zuführleitung oder an die Gießformen anschließbar ist, und daß ferner der Innenraum des Druckgefäßes außerhalb des elastischen Gießbehälters alternativ mit einer Unterdruckquelle oder einer Druckquelle verbindbar ist. Zweckmäßige Weiterbildungen der Erfindung ergeben sich aus den abhängigen Ansprüchen 2 bis 12. Es ist dabei vorteilhaft, wenn der Vorratsbehälter gleichzeitig mit dem Druckgefäß an die Vakuumpumpe anschließbar ist, darüber hinaus ist es auch zweckmäßig, wenn der Vorratsbehälter, das Druckgefäß und der Gießbehälter gleichzeitig an die Vakuumpumpe anschließbar und einzeln oder in beliebiger Kombination von der Vakuumpumpe trennbar sind. Es ist günstig, wenn das Druckgefäß schwenkbar ist. Für eine schnelle Reinigung des Druckgefäßes ist es vorteilhaft, wenn als Gießbehälter ein elastisches Schlauchstück verwendet wird, das an einer oder beiden Seiten mit einer Einfüll- und Entleerungsöffnung versehen ist. Als Druckmedium werden flüssige oder gasförmige Stoffe verwendet. Bei Verwendung von flüssigen Druckmedien kann in einfacher Weise eine Temperierung und Volumenbestimmung des ausgepreßten Gießharzes vorgenommen werden. Es ist jedoch auch denkbar, die Vorrichtung mit einer eigenen Heiz- und Kühleinrichtung zu versehen. Hierdurch kann z. B. bei Betriebsunterbrechungen das im Gießbehälter befindliche Gießharz auf Temperaturen abgekühlt werden, die die Gebrauchsdauer wesentlich verlängern. Eine andere einfache Möglichkeit der Bestimmung der im Gießbehälter befindlichen Menge Gießharzes besteht darin, die Vorrichtung insgesamt auf eine Waage zu stellen oder nur die Menge des Gießharzes anhand von Wägungen von Teilen der Vorrichtung zu bestimmen. Als Druckquelle kann auch eine Druckluftquelle dienen.

Die Erfindung löst die Aufgabenstellung in überraschend einfacher Weise. Wie noch am Ausführungsbeispiel näher zu zeigen sein wird, sind für eine solche Vorrichtung nur ganz wenige Armaturen erforderlich, und auch der apparative Aufwand ist denkbar einfach. Vom Vorratsbehälter bis zur Gießform ist das Gießharz ständig entgast und kommt nicht wieder mit der Atmosphäre oder einem Druckmedium in Kontakt. Daher werden Gießfehler, die sich aus schlecht entgastem Gießharz ergeben, vermieden. Die Verwendung eines separaten Gießbehälters in dem Druckgefäß bietet den Vorteil, daß der Gießbehälter billig ausführbar ist und schnell gewechselt werden kann. Verwendet man dazu einfache elastische Schlauchstücke, so wird der elastische Teil des Gießbehälters (z. B. Schlauchstück) bei zu hoher Belastung mit festgesetztem Gießharz einfach weggeworfen und durch einen neuen ersetzt.

Nähere Einzelheiten der Erfindung werden nachstehend an einem Ausführungsbeispiel anhand der Zeichnung näher erläutert. Es zeigen:
- Fig. 1: eine erfindungsgemäße Vorrichtung in schematischer Darstellung bis zum Befüllen des Gießbehälters und
- Fig. 2: das abgekoppelte Druckgefäß beim Verfüllen einer Gießform und
- Fig. 3: ein weiteres Ausführungsbeispiel gemäß der Erfindung.

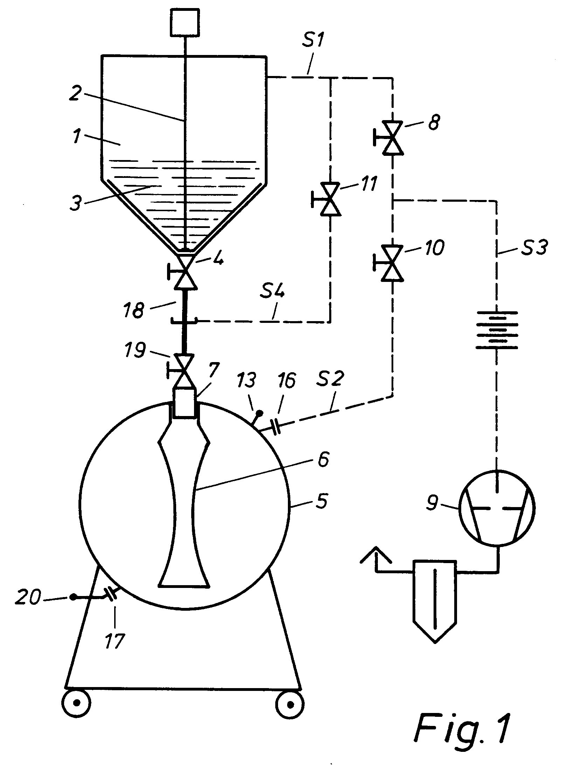

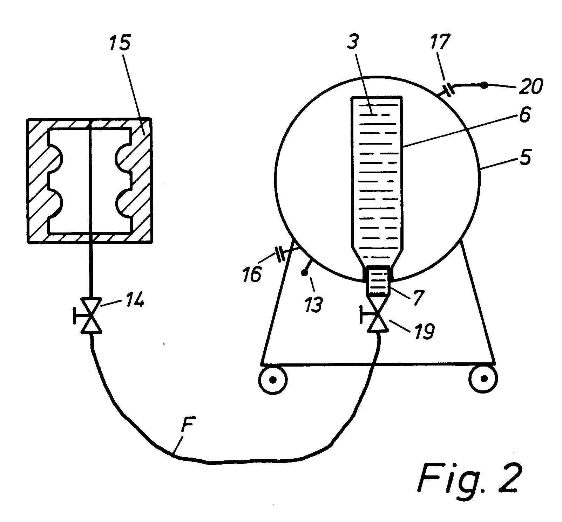

Die in den Figuren 1 bis 3 gezeigte Vorrichtung gemäß der Erfindung besteht aus einem Druckgefäß 5, das vorteilhaft fahrbar ausgebildet ist. Im Druckgefäß 5 ist ein Gießbehälter 6 aus einem elastischen Material angeordnet, der gemäß Fig. 1 und 2 aus einem Schlauch besteht, der an seinem einen Ende verschlossen ist. Das andere Ende des Schlauches ist mit einer Einfüll- und Entleerungsöffnung 7 des Druckgefäßes 5 verbunden, welches mit einem Ventil 19 verschließbar ist. Im Druckgefäß 5 sind zwei Anschlüsse 16 und 17 vorhanden, wobei an dem Anschluß 16 eine Saugleitung S2 angeschlossen ist, während an dem Anschluß 17 eine Druckleitung für die Einleitung eines Druckmediums in das Druckgefäß 5 anschließbar ist. Das Innere des Gießbehälters 6 ist vom in das Druckgefäß 5 eingeleiteten Druckmedium durch die flexible Wandung abgetrennt. Bei der Einleitung von Gießharz 3 kann das Druckgefäß 5 evakuiert werden, was das Einfüllen von Gießharz 3 in den Gießbehälter 6 ermöglicht.

Der Gießbehälter 6 und damit das Druckgefäß 5 kann z. B. von Hand in die in Fig. 2 gezeigte Stellung gedreht werden, wozu ein Handgriff 13 dient.

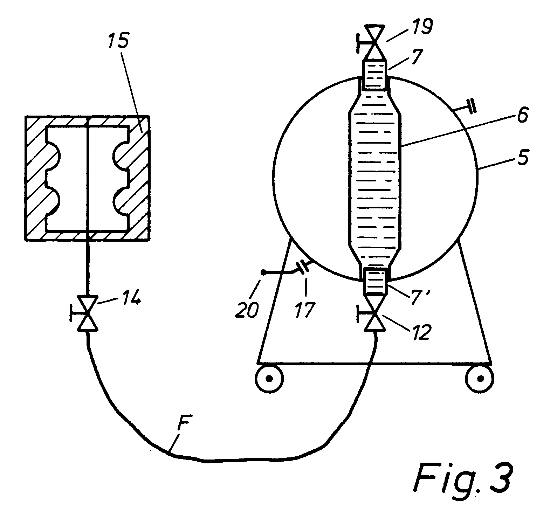

Bei einer Vorrichtung, wie sie in Fig. 3 dargestellt ist, ist der flexible Schlauch des Gießbehälters 6 an zwei Seiten jeweils mit einer Einfüll- und Entleerungsöffnung (7,7') des Druckgefäßes 5 verbunden. Für die Entleerung des mit Gießharz gefüllten Druckgefäßes 5 wird über den Anschluß 17 ein Druckmedium in das Innere des Druckgefäßes 5 eingeleitet, worauf der flexible Schlauch des Gießbehälters 6 zusammengedrückt wird und das Gießharz über die Entleerungsöffnung 7', die Fülleitung F in die Gießform 15 gelangt. Nach dem Füllen der Gießform 15 bleibt das Druckgefäß 5 über die Entleerungsöffnung 7', das Ventil 12, die Fülleitung F und das Ventil 14 mit der Gießform 15 solange verbunden und das Gas unter Druck, bis der Geliervorgang in der Gießform abgeschlossen ist.

Als Druckmedium kann entweder Druckluft oder aber eine Flüssigkeit, vorteilhaft Wasser verwendet werden, über die das Gießharz innerhalb des Gießbehälters 6 auf Gießtemperatur gehalten werden kann. Darüber hinaus hat die Verwendung eines flüssigen Druckmittels den Vorteil, daß die Menge des in das Druckgefäß 5 eingepreßten Druckmittels über geeignete Meßapparaturen sehr genau bestimmt werden kann, so daß hierdurch die genaue Menge des ausgepreßten Harzes ermittelt werden kann.

Eine andere Art der Feststellung des Gedichtes der ausgepreßten Gießharzmenge besteht darin, daß das jeweilige Gewicht des Gießharzes im Druckgefäß 5 ermittelt wird.

Bei dem Ausführungsbeispiel nach Fig. 1 ist das Druckgefäß im Zusammenhang mit einem Vorratsbehälter 1 und einer Unterdruckquelle 9 in Form einer Vakuumpumpe dargestellt.

Fig. 1 zeigt einen Vorratsbehälter 1, in dem eine Mischeinrichtung 2 angedeutet ist. Als Gießharzquelle kann gleichfalls ein Chargen- oder Durchlaufmischer dienen. Das im Vorratsbehälter 1 bereitgestellte Gießharz 3 kann über ein Ventil 4 abfließen. Das Vorratsgefäß 1 ist über eine Leitung 18, die durch das Ventil 4 und ein Ventil 19 abschließbar ist, mit der Entleerungs- und Einfüllöffnung 7 des Gießbehälters 6 verbunden. An die Leitung 18 ist eine Saugleitung S4 angeschlossen, die über Ventile 11 und 8 mit der Saugleitung S3 und damit mit der Vakuumpumpe 9 verbunden ist.

Die Saugleitung S1 ist über ein Ventil 8 und die Saugleitung S2 ist über ein Ventil 10 mit der Saugleitung S3 verbunden. Hierdurch ist gewährleistet, daß jede der Saugleitungen S1, S2 und S4 beliebig zu- und abschaltbar sind.

Bei dem in Fig. 2 dargestellten Druckgefäß kann dieses um 180° gedreht werden, so daß über den Einfüll- und Entleerungsanschluß 7 der Gießbehälter 6 entleert werden kann, was durch Einfluß der Schwerkraft erleichtert wird.

Ein Druckgefäß gemäß der Erfindung ist vorteilhaft auch bei einer Vorrichtung nach der DE-A-2 748 982 einsetzbar. Der Vorteil dieser Vorrichtung besteht auch darin, daß eine Reinigung des Gießbehälters nicht mehr erfolgen muß. Sollte in diesem Gießharzbehälter Gießharz erstarren oder sich an der Wand aufbauen, so kann dieser kostengünstige Gießbehälter in einfacher Weise durch einen neuen ersetzt werden.

## Patentansprüche

1. Vorrichtung zum Füllen von Gießformen (15) mit Gießharz (3) oder dergleichen mit einem Druckgefäß (5) zur Aufnahme des aufbereiteten Gießharzes (3), von dem aus die Gießformen (15) verfüllt und unter Druck geliert werden, dadurch gekennzeichnet, daß in dem Druckgefäß (5) ein elastischer Gießbehälter (6) mit mindestens einer Einfüll- und Entleerungsöffnung (7) angeordnet ist, die wahlweise an eine Unterdruckquelle (9), einen Vorratsbehälter (1) oder Zufuhrleitung (18) oder an die Gießformen (15) anschließbar ist, und daß ferner der Innenraum des Druckgefäßes (5) außerhalb des elastischen Gießbehälters (6) alternativ mit einer Unierdruckquelle (9) oder einer Druckquelle (20) verbindbar ist.

2. Vorrichtung nach Anspruch 1, dadurch gekennzeichnet, daß der Gießbehälter (6) aus einem flexiblen Schlauch besteht.

3. Vorrichtung nach Anspruch 2, dadurch gekennzeichnet, daß der Schlauch mit an gegenüberliegenden Enden liegenden Einfüll- und Entleerungsöffnungen (7,7') versehen ist.

4. Vorrichtung nach den Ansprüchen 1 und 2, dadurch gekennzeichnet, daß das Druckmittel eine Flüssigkeit ist.

5. Vorrichtung nach einem der Ansprüche 1 bis 4, dadurch gekennzeichnet, daß die Vorrichtung eine Einrichtung zur Erfassung des Volumens und Druckes des in den Druckbehälter (5) eingedrückten Druckmittels aufweist.

6. Vorrichtung nach einem der Ansprüche 1 bis 4, dadurch gekennzeichnet, daß die Menge des im Gießbehälter (6) jeweils befindlichen Gießharzes über eine Wägevorrichtung bestimmbar ist.

7. Vorrichtung nach einem der Ansprüche 1 bis 6, dadurch gekennzeichnet, daß der Gießbehälter (6) aus einem Vorratsbehälter (1), beispielsweise einem Endmischer befüllbar ist, in dem das Gießharz (3) unter Vakuum mischbar und für das Füllen bereitstellbar ist, daß am Druckgefäß (5) ein Anschluß (16) für die Evakuierung während der Aufnahme des Gießharzes (3) aus dem Vorratsbehälter (1) vorgesehen ist, daß die Unterdruckquelle (9), z. B. eine Vakuumpumpe, wechselweise oder gleichzeitig an den Vorratsbehälter (1) und das Druckgefäß (5) anschließbar ist, und daß die Druckquelle (20) alternativ zur Vakuumpumpe (9) an das Druckgefäß (5) anschließbar ist, und dabei das Gießharz (3) in die Gießformen (15) fördert.

8. Vorrichtung nach einem der Ansprüche 1 bis 7, dadurch gekennzeichnet, daß der Vorratsbehälter (1), das Druckgefäß (5) und der Gießbehälter (6) gleichzeitig an die Vakuumpumpe (9) anschließbar und einzeln oder in beliebiger Kombination von der Vakuumpumpe (9) trennbar sind.

9. Vorrichtung nach einem der Ansprüche 1 bis 8, dadurch gekennzeichnet, daß das Druckgefäß (5) schwenkbar ist.

10. Vorrichtung nach einem der Ansprüche 1 bis 9, dadurch gekennzeichnet, daß die Temperatur des Druckmediums einstellbar ist.

11. Vorrichtung nach einem der Ansprüche 1 bis 10, dadurch gekennzeichnet, daß die Vorrichtung mit Mitteln für die Erwärmung und/oder Kühlung für das Gießharz versehen ist.

12. Vorrichtung nach Anspruch 11, dadurch gekennzeichnet, daß das Druckmittel von der Heizeinrichtung unmittelbar temperierbar ist.

## Claims

1. A device for filling casting moulds (15) with casting resin (3) or the like, having a pressure vessel (5) for receiving the prepared casting resin (3), the casting moulds (15) being filled from the said vessel and set under pressure, **characterised in that** a deformable casting container (6) with at least one filling and emptying opening (7) is arranged in the pressure vessel (5), the said opening being connectable alternatively to a vacuum source (9), a supply container (1) or supply line (18), or to the casting moulds (15), and the inner region of the pressure vessel (5) outside the deformable casting container (6) is alternatively connectable to a vacuum source (9) or a pressure source (20).

2. A device in accordance with claim 1, **characterised in that** the casting container (6) comprises a flexible tube.

3. A device in accordance with claim 2, **characterised in that** the tube is provided with filling and emptying openings (7, 7') positioned at opposite ends.

4. A device in accordance with claims 1 and 2, **characterised in that** the pressure medium is a liquid.

5. A device in accordance with one of claims 1 to 4, **characterised in that** the device has apparatus for detecting the volume and pressure of the pressure medium injected into the pressure container (5).

6. A device in accordance with one of claims 1 to 4, **characterised in that** the amount of casting resin located in the casting container (6) at any one time can be determined by means of a weighing device.

7. A device in accordance with one of claims 1 to 6, **characterised in that** the casting container (6) can be filled from a supply container (1), for example a final mixer, in which the casting resin (3) can be mixed in a vacuum and can be prepared for filling, and a connection part (16) is provided on the pressure vessel (5) for evacuation whilst the casting resin (3) is being received from the supply container (1), and the vacuum source (9), for example a vacuum pump, can be connected alternately or simultaneously to the supply container (1) and the pressure vessel (5), and the pressure source (20) can be connected to the pressure vessel (5) as an alternative to the vacuum pump (9), and thus conveys the casting resin (3) into the casting moulds (15).

8. A device in accordance with one of claims 1 to 7, **characterised in that** the supply container (1), the pressure vessel (5) and the casting container (6) are simultaneously connectable to the vacuum pump (9) and can be isolated therefrom individually or in any combination.

9. A device in accordance with one of claims 1 to 8, **characterised in that** the pressure vessel (5) is rotatable.

10. A device in accordance with one of claims 1 to 9, **characterised in that** the temperature of the pressure medium is adjustable.

11. A device in accordance with one of claims 1 to 10, **characterised in that** the device is provided with means for heating and/or cooling for the casting resin.

12. A device in accordance with claim 11, **characterised in that** the pressure medium can be directly moderated by the heating device.

## Revendications

1. Dispositif de remplissage de moules de coulée (15) avec de la résine de coulée (3) ou similaire, comportant un récipient sous pression (5) pour recevoir la résine de coulée (3) préparée, récipient à partir duquel les moules de coulée (15) sont remplis et gélifiés sous pression, caractérisé en ce que, dans le moule de coulée (5), est disposé un récipient de coulée (6) élastique, comportant au moins une ouverture de remplissage et d'évacuation (7), qui peut, à volonté, être raccordée à une source de dépression (9), à un récipient de stockage (1), à une conduite d'alimentation (18) ou aux moules de coulée (15), et en ce que, de plus, le volume intérieur du récipient sous pression (5) peut être relié alternativement à une source de dépression (9) ou à une source de pression (20).

2. Dispositif suivant la revendication 1, caractérisé en ce que le récipient de coulée (6) est constitué par un tuyau flexible.

3. Dispositif suivant la revendication 2, caractérisé en ce que le tuyau flexible est muni d'orifices de remplissage et d'orifices d'évacuation (7, 7'), situés à des extrémités opposées.

4. Dispositif suivant les revendications 1 et 2, caractérisé en ce que le fluide de pression est un liquide.

5. Dispositif suivant l'une des revendications 1 à 4, caractérisé en ce que le dispositif présente une installation pour mesurer le volume et la pression du fluide de pression comprimé dans le récipient sous pression (5).

6. Dispositif suivant l'une des revendications 1 à 4, caractérisé en ce que la quantité de résine de coulée se trouvant chaque fois dans le récipient de coulée (6) peut être déterminée au moyen d'un dispositif de pesage.

7. Dispositif suivant l'une des revendications 1 à 6, caractérisé en ce que le récipient de coulée (6) peut être rempli à partir d'un récipient de stockage (1), par exemple un mélangeur final, dans lequel la résine de coulée (3) peut être mélangée sous vide et être préparée pour le remplissage, en ce qu'il est prévu, sur le récipient sous pression (5), un raccord (16) pour faire le vide pendant l'arrivée de la résine de coulée (3) provenant du récipient de stockage (1), en ce que la source de dépression (9), par exemple une pompe à vide, peut être raccordée, alternativement ou en même temps, au récipient de stockage (1) et au récipient sous pression (5) et en ce que la source de pression (20) peut être raccordée au récipient sous pression (5), en variante à la pompe à vide (9), et transporte alors la résine de coulée (3) dans les moules de coulée (15).

8. Dispositif d'après l'une des revendications 1 à 7, caractérisé en ce que le récipient de stockage (1), le récipient sous pression (5) et le récipient de coulée (6) peuvent être reliés simultanément à la pompe à vide (9) et peuvent être séparés de la pompe à vide (9) un par un, ou suivant la combinaison que l'on veut.

9. Dispositif suivant l'une des revendications 1 à 8, caractérisé en ce que le récipient sous pression (5) peut basculer.

10. Dispositif suivant l'une des revendications 1 à 9, caractérisé en ce que l'on peut régler la température du fluide de pression.

11. Dispositif d'après l'une des revendications 1 à 10, caractérisé en ce que le dispositif comporte des moyens de chauffage et/ou de refroidissement de la résine de coulée.

12. Dispositif suivant la revendication 11, caractérisé en ce que le fluide de pression peut être mis à température directement par le dispositif de chauffage.
